# EUROPÄISCHE PATENTANMELDUNG

(11) **EP 2 431 761 A1**
(43) Veröffentlichungstag der Anmeldung: **21.03.2012**
(21) Anmeldenummer: 11178429.4
(22) Anmeldetag: 23.08.2011
(51) Int. Cl.: G01S 7/481, B25F 5/00, G01S 17/02, G01S 17/88, B23B 49/00

(54) **Ausrichthilfe und Steuerungsverfahren**

(30) Priorität: 17.09.2010 DE 102010040995
(71) Anmelder: HILTI Aktiengesellschaft, 9494 Schaan (LI)
(72) Erfinder: Böni, Hans, 9470 Werdenberg (CH); Hoch, Daniel, 9495 Triesen (LI); Eschenmoser, Adrian, 9424 Rheineck (CH)

(57) **Zusammenfassung**

Eine Ausrichthilfe zum Ausrichten einer Handwerkzeugmaschine hat ein Gehäuse, das an der Handwerkzeugmaschine festlegbar ist. Eine Laserdistanzmesseinrichtung ist geeignet zum Erzeugen eines Lichtstrahls längs einer optischen Achse und dient zum Bestimmen einer von dem Lichtstrahl zurückgelegte Wegstrecke bis zu einem Untergrund. Eine Ablenkeinrichtung dient zum sequenziellen Ablenken des Lichtstrahls in wenigstens drei Richtungen mit verschiedenem Azimutwinkeln zu der optischen Achse. Eine Auswertungseinrichtung ist eingerichtet eine Neigung der optischen Achse zu dem Untergrund basierend auf den entlang der wenigstens drei Richtungen bestimmten Wegstrecken zu bestimmen. Eine Ausgabeeinrichtung dient zum Ausgeben der ermittelten Neigung.

## Beschreibung

### GEBIET DER ERFINDUNG

Die vorliegende Erfindung betrifft eine Ausrichthilfe zum Ausrichten einer Handwerkzeugmaschine und ein Steuerungsverfahren für eine Ausrichthilfe.

### OFFENBARUNG DER ERFINDUNG

Das erfindungsgemäße Steuerungsverfahren für eine Ausrichthilfe zum Ausrichten einer Handwerkzeugmaschine beinhaltet folgende Schritte. Eine an der Handwerkzeugmaschine festgelegte Laserdistanzmesseinrichtung erzeugt einen Lichtstrahl längs einer zu einer Arbeitsrichtung der Handwerkzeugmaschine fest ausgerichteten optischen Achse. Eine Ablenkeinrichtung lenkt den Lichtstrahl sequenziell in wenigstens drei Richtungen mit verschiedenem Azimutwinkel zu der optischen Achse ab. Die Laserdistanzmesseinrichtung bestimmt von dem Lichtstrahl zurückgelegte Wegstrecken entlang der wenigstens drei Richtungen bis zu einem Untergrund. Eine Auswertungseinrichtung ermittelt eine Neigung der optischen Achse zu dem Untergrund basierend auf denen wenigstens drei Richtungen und zugehörig bestimmten Wegstrecken. Eine Ausgabeeinrichtung wird basierend auf der ermittelten Neigung angesteuert.

Die erfindungsgemäße Ausrichthilfe zum Ausrichten einer Handwerkzeugmaschine hat ein Gehäuse, das an der Handwerkzeugmaschine festlegbar ist. Eine Laserdistanzmesseinrichtung ist geeignet zum Erzeugen eines Lichtstrahls längs einer optischen Achse und dient zum Bestimmen einer von dem Lichtstrahl zurückgelegten Wegstrecke bis zu einem Untergrund. Eine Ablenkeinrichtung dient zum sequenziellen Ablenken des Lichtstrahls in wenigstens drei Richtungen mit verschiedenem Azimutwinkeln zu der optischen Achse. Eine Auswertungseinrichtung ist eingerichtet eine Neigung der optischen Achse zu dem Untergrund basierend auf den entlang der wenigstens drei Richtungen bestimmten Wegstrecken zu bestimmen. Eine Ausgabeeinrichtung dient zum Ausgeben der ermittelten Neigung.

Die Laserdistanzmesseinrichtung kann eine Entfernung des Untergrundes zu der Handwerkzeugmaschine bestimmen. Die Ablenkeinrichtung verschwenkt den Lichtstrahl der Laserdistanzmesseinrichtung in mehrere Richtungen, um die Entfernung zu dem Untergrund in diesen Richtungen zu ermitteln. Hierdurch benötigt die Ausrichthilfe nur genau ein Laserdistanzmessgerät. Aus den drei oder mehr Entfernungsmessungen kann beispielsweise per Triangulation die Neigung der Lichtstrahlen zu dem Untergrund bestimmt werden. Da die Laserdistanzmesseinrichtung fest mit der Handwerkzeugmaschine verbunden ist, kann die bestimmte Neigung der optischen Achse eindeutig auf die Neigung der Handwerkzeugmaschine zu dem Untergrund übertragen werden. Bei einer Ausgestaltung, die keine absolute Angabe der Neigung erfordert, kann die Neigungsrichtung als die Richtung mit den kürzesten Entfernungen zum Untergrund identifiziert werden.

Eine Ausgestaltung sieht vor, dass der Azimutwinkel im Bereich zwischen 150 Grad und 170 Grad oder im Bereich zwischen 190 Grad und 230 Grad schrittweise erhöht wird. Insbesondere der Bereich von 190 Grad bis 230 Grad erweist sich als besonders effektiv robust und schnell die Neigung der Handwerkzeugmaschine zum Untergrund zu bestimmen.

Eine Ausgestaltung sieht vor, dass die Auswertungseinrichtung einen gleitenden Median aufeinanderfolgender bestimmter Wegstrecken ermittelt und Wegstrecken für das Ermitteln der Neigung ausfiltert, wenn diese um mehr als 5 % von dem gleitenden Median abweichen. Beim Bohren an Kanten oder dergleichen führen einzelne Richtungen an dem bearbeiteten Untergrund vorbei. Die zugehörigen Entfernungsmessungen werden ausgeblendet. Der Toleranz von 5 % sind Untersuchungen zugrunde gelegt, dass ein Anwender Neigungen von über 10 Grad von ohne Hilfsmittel zuverlässig auch in der Vertikalen erkennen kann.

Eine Ausgestaltung sieht vor, dass ein Polarwinkel des Lichtstrahls zur optischen Achse konstant ist. Vorzugsweise liegt der Polarwinkel im Bereich von 5 Grad bis 15 Grad.

Eine Ausgestaltung sieht vor, dass die Ablenkeinrichtung ein um die optische Achse drehbares optisches Element mit einer zur optischen Achse geneigten Facette und einen Antrieb zum Drehen des optischen Elements um die optische Achse aufweist. Das optische Element ist beispielsweise ein Prisma oder eine zur optischen Achse exzentrisch angeordnete Linse. Alternativ oder zusätzlich kann die Ablenkeinrichtung einen verschwenkbaren Spiegel aufweisen.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: eine Bohrmaschine mit Ausrichtungshilfe;
- Fig. 2: Projektion von Messrichtungen auf einen Untergrund;

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

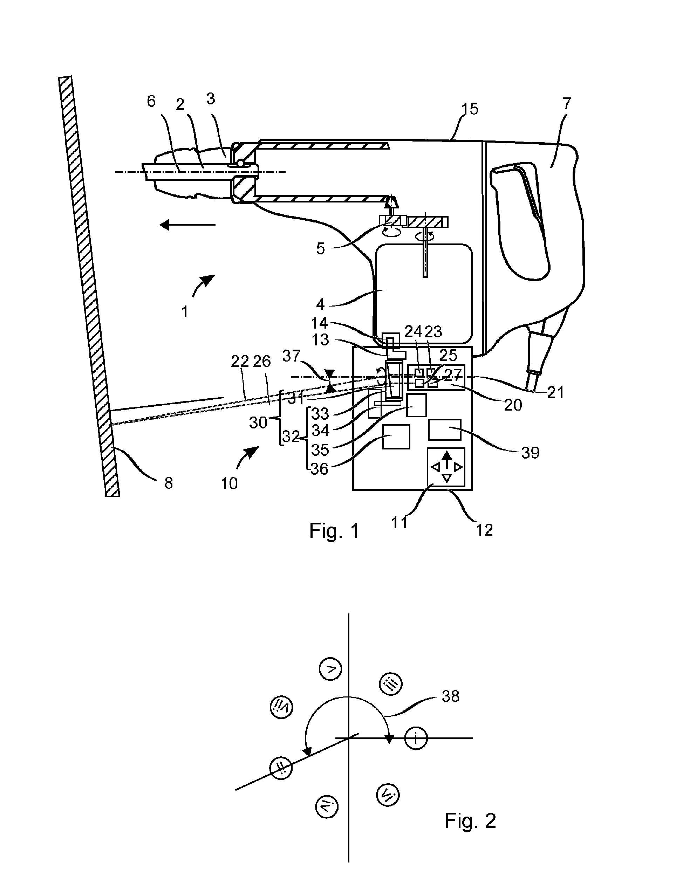

Fig. 1 zeigt eine Bohrmaschine **1** als Beispiel für handgeführte Werkzeugmaschinen. Ein Bohrer **2** kann in eine Werkzeugaufnahme **3** der Bohrmaschine **1** eingesetzt werden. Ein Motor **4** dreht über einen Antriebsstrang **5** die Werkzeugaufnahme **3** um eine Arbeitsachse **6.** Ein Anwender kann in die Bohrmaschine **1** mittels eines Handgriffs **7** führen. Eine Orientierung der Arbeitsachse **6** zu einem Untergrund **8** kontrolliert der Anwender.

Eine Ausrichtungshilfe **10** unterstützt den Anwender im Hinblick auf die Orientierung der Arbeitsachse **6** zu dem Untergrund **8.** Eine Anzeige **11** zeigt dem Anwender eine Neigung der Arbeitsachse **6** zum Lot des Untergrunds **8** an. Die Anzeige **11** kann beispielsweise die Richtung angeben, in welche die Bohrmaschine **1** geschwenkt werden muss, damit die Arbeitsachse **6** senkrecht zum Untergrund **8** ist. Alternativ oder zusätzlich kann ein akustischer Signalgeber den Anwender auf eine Abweichung von dem Lot hinweisen. Die Ausrichtungshilfe **10** kann bevorzugt als separates Element an der Bohrmaschine **1** befestigt werden. Ein Gehäuse **12** der Ausrichtungshilfe **10** hat Verriegelungselemente **13,** die in entsprechend vorgesehene Gegenstücke **14** an der Bohrmaschine **1** eingreifen. Alternativ kann die Ausrichtungshilfe **10** mit ihren Baugruppen in einem Gehäuse **15** der Bohrmaschine **1** angeordnet sein.

Die Ausrichtungshilfe **10** beinhaltet eine Laserdistanzmesseinrichtung **20.** Die Laserdistanzmesseinrichtung **20** gibt längs einer optischen Achse **21** einen sichtbaren oder unsichtbaren z.B. infraroten Lichtstrahl **22** aus. Die optischen Achse **21** ist vorzugsweise parallel zu der Arbeitsachse **6** ausgerichtet. Die Laserdistanzmesseinrichtung **20** bestimmt die von dem Lichtstrahl **22** zurückgelegte Wegstrecke bis zu einem Hindernis, sprich dem Untergrund **8.**

Eine beispielhafte Laserdistanzmesseinrichtung **20** beinhaltet eine Laserlichtquelle **23,** welche den Lichtstrahl **22** erzeugt. Eine Modulationseinrichtung **24** prägt eine Frequenzmodulation auf die Lichtstrahl **22** auf. Eine Empfangsoptik **25** detektiert vom Untergrund **8** reflektierte Anteile des Lichtstrahls **26.** Die Frequenzverschiebung aufgrund der Frequenzmodulation zwischen dem detektierten Lichtstrahl **26** und dem ausgesendeten Lichtstrahl **22** ist ein Maß für die Laufzeit und damit die zurückgelegte Wegstrecke des Lichtstrahls **22.** Eine Auswertungseinrichtung **27** ermittelt aus der Frequenzverschiebung die Wegstrecke. Andere Ausführungsformen von Laserdistanzmesseinrichtungen, welche basierend auf einem Lichtstrahl **22** eine Entfernung messen, sind ebenfalls geeignet.

Die Ausrichtungshilfe **10** beinhaltet weiters eine Ablenkeinrichtung **30.** Beispielsweise ist ein Prisma **31** auf der optischen Achse **21** angeordnet. Ein Antrieb **32** dreht das Prisma **31** in mehrere Stellungen um die optische Achse **21.** Der Antrieb **32** beinhaltet beispielsweise ein Hohlrad **33,** in welches das Prisma **31** eingesetzt ist, und einen Motor **34,** der mit dem Umfang des Hohlrads **33** kraftgekoppelt ist. Ein Sensor **35,** z.B. ein Magnetsensor oder eine Lichtschranke, erfasst die aktuelle Stellung des Hohlrads **33.** Eine Steuerungseinrichtung **36** kontrolliert ein schrittweises Verdrehen des Hohlrads **33** und damit des Prisma **31** um einen vorgegebenen Winkel.

Der Lichtstrahl **22** wird durch das Prisma **31** von der optischen Achse **21** abgelenkt. Die Richtung des Lichtstrahls **22** wird nachfolgend in Polarkoordinaten angegeben. Ein Polarwinkel **37** gibt die Neigung des Lichtstrahls **22** zu der optischen Achse **21** in einer Ebene an, in der sowohl der Lichtstrahl **22** als auch die optische Achse **21** liegt. Der Polarwinkel **37** ist für jede der Stellungen des Prisma **31** gleich und liegt beispielsweise im Bereich zwischen 5 und 10 Grad. Ein Azimutwinkel **38** gibt einen Winkel in einer Ebene senkrecht zu der optischen Achse **21** an (Fig. 2). Der Azimutwinkel **38** ändert sich mit dem in verschiedene Stellungen gedrehten Prisma **31.**

In einem beispielhaften Verfahren wird das Prisma **31** um 4/7 von 360 Grad schrittweise gedreht. Die sich ergebenden aufeinanderfolgenden um 4/7 von 360 Grad zunehmenden Azimutwinkel **38** sind in Fig. 2 in einer Projektion auf eine Ebene senkrecht zu optischen Achse **21** dargestellt, die römischen Ziffern geben die Reihenfolge der eingenommenen Richtungen an. Ein Abstand der Richtung zu einer Mitte ist durch den Polarwinkel vorgegeben. Die Laserdistanzmesseinrichtung **20** bestimmt für jeden Azimutwinkel **38** die Wegstrecke, welche der Lichtstrahl **22** bis zu dem Untergrund **8** zurücklegt.

Eine Auswertungseinrichtung **39** der Ausrichtungshilfe **10** ermittelt aus wenigstens drei aufeinander folgenden Distanzmessungen bei unterschiedlichen Azimutwinkeln **38** einen Neigungswinkel der optischen Achse **21** zu dem Lot auf den Untergrund **8.** Hierfür erweist sich eine Schrittweite der Azimutwinkel **38** zwischen 150 Grad und 170 Grad oder zwischen 190 Grad und 230 Grad als besonders vorteilhaft. Drei aufeinander folgende Messungen werden unter weit auseinander liegenden Richtungen ausgeführt, hierdurch kann auch bei einer geringen Anzahl von Messungen eine hohe Messgenauigkeit erreicht werden. Die Anzahl wird vorzugsweise gering gehalten, da das Messprinzip der Laserdistanzmesseinrichtungen **20** typischerweise eine Messdauer von 0,1 s benötigt. Hierbei erwies es sich überraschenderweise günstiger große Schrittweiten von über 180 Grad mit entsprechenden Totzeiten der Messungen während des Drehens in Kauf zu nehmen. Vorteilhafterweise wiederholen sich die Richtungen nicht für nachfolgende Messungen. Dies kann zur Robustheit der Messmethode beitragen, insbesondere falls der Untergrund **8** lokale Erhebungen oder Vertiefungen aufweist.

Eine Ausgestaltung bestimmt nur qualitativ die Neigung der optischen Achse **21** zu dem Untergrund **8.** Die Auswertungseinrichtung **39** ermittelt, bei welchem Azimutwinkel **38** kürzere Entfernungen gemessen werden und identifiziert eine Neigung der optischen Achse **21** in Richtung dieses Azimutwinkels **38** geneigt ist.

Die Auswertungseinrichtung **39** kann einen gleitenden Median oder einen gleitenden arithmetischen Mittelwert der Distanzmessungen bestimmen. Aufgrund des Fortschritts beim Bohren erhöht sich kontinuierlich der Median. Eine Abweichung zwischen den einzelnen aufeinander folgenden Distanzmessungen ergibt sich neben der Neigung der optischen Achse **21** zum Untergrund **8** auch aufgrund von Messeungenauigkeiten der Laserdistanzmesseinrichtung **20.** Größere sprunghafte Abweichungen können auf Kanten und Vorsprünge an dem Untergrund **8** hinweisen. Ein Filter unterdrückt Distanzmessungen, welche um mehr als 10% von dem gleitenden Median bzw. Mittelwert abweichen.

Die Ausrichtungshilfe **10** kann auch für andere Werkzeugmaschinen mit einem drehenden Werkzeug verwendet werden. Beispiele sind Elektroschrauber, Winkelschleifer, Bohrhämmer. Die Neigung der optischen Achse **21** zu der Arbeitsachse **6** ist durch die Halterung der Ausrichtungshilfe **10** zweckmäßigerweise fest vorgegeben. Bei Schraubern, Bohrmaschinen etc. sind die optische Achse **21** und die Arbeitsachse **6** vorzugsweise parallel. Bei Winkelschleifern etc. ist die optische Achse **21** vorzugsweise senkrecht zu der Drehachse des scheibenförmigen Werkzeugs. In einer Weiterbildung kann vorgesehen sein, dass die Ausrichtungshilfe **10** gegenüber der Werkzeugmaschine **1** verschwenkt werden um andere Neigungswinkel von z.B. 30 Grad, 45 Grad oder 60 Grad einzustellen.

Die Auswertungseinrichtung **39** kann basierend auf den Entfernungsmessungen die bestimmen, wie weit der Bohrer **2** oder ein anderes Werkzeug den Untergrund **8** penetriert. Beim Betätigen eines Tasters wird eine aktuelle Entfernung zum Untergrund **8** als Referenzwert bestimmt. Eine Differenz der aktuellen Entfernung beim Benutzen der Bohrmaschine **1** zu dem Referenzwert kann durch die Ausgabeeinrichtung **11** ausgegeben werden. In einer Weiterbildung kann ein Sollwert für die Differenz eingegeben werden. Sobald die Differenz den Sollwert erreicht, wird der Motor **4** abgeschaltet oder eine Warnung ausgegeben.

## Patentansprüche

1. Steuerungsverfahren für eine Ausrichthilfe zum Ausrichten einer Handwerkzeugmaschine, bei welchem
eine an der Handwerkzeugmaschine festgelegte Laserdistanzmesseinrichtung **(20)** einen Lichtstrahl **(21)** längs einer zu einer Arbeitsrichtung **(6)** der Handwerkzeugmaschine fest ausgerichteten optischen Achse **(22)** erzeugt;
eine Ausgabeeinrichtung **(11)** den Lichtstrahl **(21)** sequenziell in wenigstens drei Richtungen mit verschiedenem Azimutwinkel **(38)** zu der optischen Achse **(22)** ablenkt;
die Laserdistanzmesseinrichtung **(20)** von dem Lichtstrahl **(21)** zurückgelegte Wegstrecken entlang der wenigstens drei Richtungen bis zu einem Untergrund **(8)** bestimmt;
eine Auswertungseinrichtung **(39)** eine Neigung der optischen Achse **(22)** zu dem Untergrund **(8)** basierend auf denen wenigstens drei Richtungen und zugehörig bestimmten Wegstrecken ermittelt und
eine Ausgabeeinrichtung **(11)** basierend auf der ermittelten Neigung angesteuert wird.

2. Steuerungsverfahren nach Anspruch 1, **dadurch gekennzeichnet, dass** der Azimutwinkel **(38)** im Bereich zwischen 150 Grad und 170 Grad oder im Bereich zwischen 190 Grad und 230 Grad schrittweise erhöht wird.

3. Steuerungsverfahren nach Anspruch 1 oder 2, **dadurch gekennzeichnet, dass** die Auswertungseinrichtung **(39)** einen gleitenden Median aufeinanderfolgender bestimmter Wegstrecken ermittelt und Wegstrecken für das Ermitteln der Neigung ausfiltert, wenn diese um mehr als 5 % von dem gleitenden Median abweichen.

4. Steuerungsverfahren nach einem der vorhergehenden Ansprüche, **dadurch gekennzeichnet, dass** ein Polarwinkel **(37)** des Lichtstrahls **(21)** zur optischen Achse **(22)** konstant ist.

5. Steuerungsverfahren nach Anspruch 4, **dadurch gekennzeichnet, dass** der Polarwinkel **(37)** im Bereich von 5 Grad bis 15 Grad liegt.

6. Ausrichthilfe zum Ausrichten einer Handwerkzeugmaschine mit einem Gehäuse, das an der Handwerkzeugmaschine festlegbar ist,
einer Laserdistanzmesseinrichtung **(20)** zum Erzeugen eines Lichtstrahl **(21)**s längs einer optischen Achse **(22)** und zum Bestimmen einer von dem Lichtstrahl **(21)** zurückgelegte Wegstrecke bis zu einem Untergrund **(8);**
einer Ausgabeeinrichtung **(40)** zum sequenziellen Ablenken des Lichtstrahl (21)s in wenigstens drei Richtungen mit verschiedenem Azimutwinkel (38)n zu der optischen Achse **(22);**
einer Auswertungseinrichtung **(39)** zum Ermitteln einer Neigung der optischen Achse **(22)** zu dem Untergrund **(8)** basierend auf den entlang der wenigstens drei Richtungen bestimmten Wegstrecken und
einer Ausgabeeinrichtung **(11)** zum Ausgeben der ermittelten Neigung.

7. Ausrichthilfe nach Anspruch 6, **dadurch gekennzeichnet, dass** die Ausgabeeinrichtung **(40)** ein um die optische Achse **(22)** drehbares optisches Element mit einer zur optischen Achse **(22)** geneigten Facette und einen Antrieb zum Drehen des optischen Elements um die optische Achse **(22)** aufweist.

8. Ausrichthilfe nach Anspruch 6, **dadurch gekennzeichnet, dass** die Ausgabeeinrichtung **(40)** einen verschwenkbaren Spiegel aufweist.
